(19)

Europäisches Patentamt
European Patent Office
Office européen des brevets

(11) **EP 4 779 536 A1**

(12) **EUROPEAN PATENT APPLICATION**

(43) Date of publication:
**22.07.2026 Bulletin 2026/30**

(21) Application number: **25153206.5**

(22) Date of filing: **21.01.2025**

(51) International Patent Classification (IPC):
**G06N 20/20** (2019.01)   **G06F 30/13** (2020.01)
**G06F 30/27** (2020.01)   **G06Q 50/08** (2012.01)

(52) Cooperative Patent Classification (CPC):
**G06N 20/20; G06F 30/13; G06F 30/27;
G06Q 50/08;** G06F 2111/10; G06F 2111/16

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Trimble Inc
Westminster CO 80021 (US)**

(72) Inventor: **PITKÄNEN, Henri
02600 Hatsinanpuisto 8, Espoo (FI)**

(74) Representative: **Bryn-Jacobsen, Caelia
Kilburn & Strode LLP
Lacon London
84 Theobalds Road
London WC1X 8NL (GB)**

(54) **ACCEPTANCE OF AI ENABLED DECISION MAKING SUPPORT IN EXPERT SYSTEMS**

(57)    A computer implemented method is presented, the method comprising: collecting feature data comprising a plurality of features, each feature associated with a model of one or more models and a value; generating a machine learning model by performing feature selection on the feature data to select a chosen feature space comprising a subset of the plurality of features, wherein the subset of the plurality of features comprises one or more additional feature, wherein the value associated with each of the one or more additional feature in the chosen feature space is set to zero; training the machine learning model using the one or more values associated with the one or more features of the subset of the plurality of features; detecting a user initiated change affecting the chosen feature space. The method further comprises, in response to detecting the user initiated change affecting the chosen feature space: identifying one or more relevant features of the plurality of features; determining if at least one of the one or more relevant features is an unseen feature and performing either partial or full retraining based on the determination. The retrained model can then be applied in classifying the feature data.

Fig. 3

**Description**

**TECHNICAL FIELD**

The present disclosure relates to systems and methods for training and retraining a machine learning model in order to classify, based on their technical features, a set of model objects for a construction project in to a number of sub-collections.

**BACKGROUND**

Traditionally, systems designed to provide classifications of a set of model objects associated with a construction project have been limited in their capacity to dynamically adapt based on user changes. This introduces inefficiencies into the process as the user may be required to make a user adjustment to each classification determined by the machine learning model, without a subsequent classification determined by the model benefitting or adjusting based on the previous user adjustment, requiring the user to again make the same or associated adjustments. In looking to dynamically account for user changes or additional user requirements, traditional methods and systems require fully retraining which introduces a bottleneck and hinders the speed and computational efficiency of the process.

Accordingly, it would be advantageous to provide systems and methods which address the above-mentioned problems.

**SUMMARY**

Aspects of the present disclosure of the present application are set out in the independent claims. Other aspects of the present disclosure will be appreciated from the following description.

In overview, the present disclosure provides a first aspect comprising a computer implemented method, wherein the computer implemented method comprises: collecting feature data comprising a plurality of features, each feature associated with a model of one or more models and one or more values; generating a machine learning model by performing feature selection on the feature data to select a chosen feature space comprising a subset of the plurality of features, wherein the subset of the plurality of features comprises one or more additional feature, each of the one or more additional features in the chosen feature space associated with a model value set to zero; training the machine learning model using the one or more values associated with the one or more features of the subset of the plurality of features; detecting a user initiated change affecting the chosen feature space. The method further comprises, in response to detecting the user initiated change affecting the chosen feature space: identifying one or more relevant features of the plurality of features; determining if at least one of the one or more relevant features is an unseen feature, wherein an unseen feature is a feature not comprised by the chosen feature space. The method further comprises, in response to determining that at least one of the one or more relevant features is an unseen feature: performing a full retraining of the machine learning model based on the one or more relevant features. The method further comprises, in response to determining that none of the one or more relevant features is an unseen feature: performing a partial retraining of the machine learning model by performing model boosting to assign the relevant features a non-zero weight in the chosen feature space using the one or more values associated with the one or more relevant features. The method further comprises, classifying, using the retrained machine learning model, the feature data in to a plurality of sub-collections.

In some embodiments, the method further comprises: detecting a user input requesting to increase level of detail relating to a target set of model objects of a model for a construction project; classifying, using the retrained machine learning model, the target set of model objects to a first sub-collection of the plurality of sub-collections; increasing the level of detail of the target set of model objects to a level of detail defined by the first sub-collection.

In some embodiments, increasing the level of detail of the target set of model objects to the level of detail defined by the first sub-collection comprises: adding copied feature data to the target set of model objects, wherein the copied feature data comprises copies of details comprised in feature data associated with one or more sets of model objects in the first sub-collection, that were not comprised in feature data associated with the target set of model objects.

In some embodiments, performing the full retraining of the machine learning model comprises: updating the chosen feature space to additionally comprise the one or more unseen features; retraining the machine learning model using the updated chosen feature space and the one or more values associated with the one or more features comprised by the chosen feature space.

In some embodiments, performing a partial retraining of the machine learning model by performing model boosting to assign the relevant features a non-zero weight in the chosen feature space comprises using one or more values associated with one or more existing features in the chosen feature space, wherein the one or more existing features do not comprise any of the one or more relevant features.

In some embodiments, the feature data further comprises data indicative of one or more historic user initiated changes associated with at least one of the one or more models.

In some embodiments, the user initiated change or the one or more historic user initiated changes can comprise: a user selection of the one or more relevant features of the plurality of features; adding a new set of model objects to a sub-collection of the plurality of sub-collections; deleing a set of model objects from a sub-collection of the plurality of sub-collections; moving a set of model objects to or from a sub-collection of the plurality of sub-collections; adjusting feature selection decision making criteria associated with the feature space.

In some embodiments, the method further comprises displaying, to a user, the chosen feature space and/or at least one of the plurality of sub-collections; and, detecting the user change affecting the feature space comprises, in response to displaying the chosen feature space and/or at least one of the plurality of sub-collections: receiving a user input instructing the user change.

In some embodiments, the method further comprises: determining the feature data requires pre-processing and in response preprocessing the feature data prior to training the one or more machine learning models.

In some embodiments, generating the machine learning model by performing feature selection on the feature data to select the chosen feature space comprising a subset of the plurality of features comprises: performing recursive feature elimination (RFE) to determine one or more most important features of the plurality of features; generating the machine learning model using the chosen feature space, wherein the chosen feature space comprises the one or more most important features.

In some embodiments, generating the machine learning model by performing feature selection on the feature data to select the chosen feature space comprising a subset of the plurality of features comprises: sequentially generating a plurality of intermediate machine learning models, each intermediate machine learning model comprising a different subset of the plurality of features; and, evaluating each intermediate machine learning model of the plurality using a loss function to generate a performance score; determining a performance score of the plurality of performance scores meets a performance threshold; selecting the intermediate machine learning model associated with the performance scores that meets a performance threshold and/or criteria as the machine learning model; wherein the selected intermediate machine learning model minimises the number of important features in the chosen feature space.

In some embodiments, the method further comprises encoding and/or saving the chosen feature space and trained machine learning model.

In some embodiments, classifying, using the machine learning model, the feature data in to a plurality of sub-collections comprises: generating for each sub-collection of the plurality of sub-collections, a predicted probability for each set of model objects of a plurality of sets of model objects associated with the one or more models comprised in the feature data; selecting, for each set of model objects comprised in the feature data, a first predicted sub-collection based on the respective predicted probabilities for the set of model objects; determining if a user has filtered out the first predicted sub-collection; in response to determining that the user has filtered out the first predicted class: selecting based on the respective predicted probabilities for the set of model objects, a second predicted class, wherein the second predicted class has not be filtered out; assigning the set of model objects to the second predicted class; in response to determining that the user has not filtered out the first predicted class: assigning the set of model objects to the first predicted class.

A second aspect comprises a computer program comprising instructions which, when the program is run by a computer, cause the computer to carry out any method of the present disclosure.

A third aspect comprises an apparatus comprising means for carrying out any method of the present disclosure.

## BRIEF DESCRIPTION OF THE DRAWINGS

Aspects of the present disclosure will now be described, by way of example only, with reference to the accompanying drawings, in which:

Fig. 1 shows feature data for a construction project in both a first un-classified format and a second classified-format;

Fig. 2a shows the plurality of features associated with the feature data in a first pre-selection state, Fig. 2b shows the plurality of features shown in Fig.2a in a second preliminary selection state, Fig.2c shows the plurality of features shown in Figs.2a-b in a third partially retrained selection state, Fig.2d shows the plurality of features shown in Figs.2a-c in a fourth fully retrained selection state.

Fig. 3 shows a method according to the present disclosure for training and retraining a machine learning model in order to classify the feature data of Figs. 1a-b using the plurality of features of Fig. 2a-d;

Fig. 4 shows a computing device for implementing the operations described herein.

## DETAILED DESCRIPTION

The present invention is applicable to any apparatus, system or equipment that is configured or configurable to support computer-aided modeling, and corresponding modeling applications (i.e. modeling programs), or any other system/applications configured or configurable to create and/or to manipulate digital representations of real-world articles and/or related documentations, like engineering drawings. Examples of such applications are computer aided design applications and computer aided modeling applications, such as different Building Information Modeling (BIM) applications. Current BIM applications are used to plan, design, construct, operate and maintain diverse construction products (physical structures), such as different buildings, roads, bridges, ports, tunnels, etc.

Various programming techniques, storage of data in memory and manners of modeling real world articles and implementing databases develop constantly. This may require extra changes in the invention. Consequently, all terms and expressions should be interpreted broadly, and they are intended to describe, not to restrict, the invention.

A model (also referred to as a digital model, structure, object and/or solution) of a construction product, such as a building, may comprise one or more separate sub-models, for example an architecture model and an engineering model that can be processed as if they were individual models. Hence, herein the term model covers a separate sub-model as well as any combination of sub-models. A model can in turn comprises one or more model objects that represent pieces (articles) forming the modeled construction product in real-world, and/or used during fabrication of the modeled construction product. Since a piece, for example an engineering drawing of a floor, may itself comprise further pieces, like detailed drawings on columns, a term "set of model objects" is used herein to cover the wide variety of pieces, a non-limiting list of pieces including single pieces/items/elements, combinations of two or more pieces, one or more structures forming a further structure, one or more connections with their pieces, and one or more technical documents. A non-limiting list of different pieces include a bolt, an embed, a part, a weld, a reinforcement splice, an assembly, a subassembly, reinforcing and drawings. Hence, a set of model objects may comprise anu number of model objects starting with one model object, and a set of model objects may comprise any number of sets of model objects, starting with zero.

During modeling different definitions, including geometrical properties, location, connecting sets of model objects, technical document definitions, and other characteristics are added to details of the sets of model objects, when the modeling progresses from an approximate model to a fabrication ready model. In other words, during modeling the level of detail is increasing, the level of detail being essentially how much detail is included in the set of model objects. Adding one new detail increases the level of detail, but one may add a plurality of details to increase level of detail.

In a first aspect, the present disclosure provides a method for more efficiently retraining a machine learning model based on user changes in order to provide accurate classifications of three-dimensional construction models and/or structures based on a plurality of technical features associated with each of the construction models and/or structures. The method comprises using feature selection to narrow down the plurality of features associated with the construction structures to a subset of the most important features. Performing feature selection reduces the dimensionality in order to create a smaller, more focused feature space. This results in a more lightweight model with faster and less computationally intensive training and/or retraining. Feature selection can be performed to optimise the trade-off between the computational efficiency and speed of the model with the model accuracy. Additionally, high-dimensional models can sometimes suffer from reduced performance when noisy data is present but in performing feature selection to reduce the dimensionality of the feature space, the model also benefits from improved robustness as feature elimination results in less noisy data.

Subsequent to performing feature selection to determine the subset of most important features, the other less relevant features of the plurality are not completely discarded, instead one or more of the features can be included into the feature space as additional features, wherein the additional features are kept in the data set as part of the chosen feature space, but have their value set to zero. This means the additional features are part of the feature space but have no effect on the model's initial predictions and add almost no computational overhead because the model ignores zero-value fields during calculations. By keeping a number of additional features in the model with a zero value has a negligible effect in the computational efficiency and speed of the model, but reduces the computational resources required for subsequent retraining of the model as including the additional features in the model's structure means boosting can subsequently be used to retrain the model. Using boosting techniques to adapt the model dynamically avoids the computational overhead of full retraining, making the process highly efficient. By performing boosting operations, the method activates additional features with a non-zero value by reintroducing the data points of the previously hidden feature values, into the boosting. By first performing feature selection prior to performing boosting, the boosting operation benefit from the reduced chosen feature space generated via feature selection as by minimizing the number of features in the feature space, the number of features used in boosting tree computations is also reduced making the process faster and more computationally efficient. Further, by integrating the known feature values directly into boosting rounds, this approach allows the model to quickly adapt to the new information. For example, instead of retraining the entire model-which could take 40 minutes (as an example)-the present invention can make these updates in just under a minute, while still achieving strong classification performance. The use of boosting in the manner is both efficient and flexible, enabling rapid, user-driven updates to the model in dynamic or interactive learning environments.

Further, by dynamically initiating retraining based on a user change that affects the feature space, the method improves the adaptability, interpretability and/or interoperability of the method which is particularly valuable in applications requiring domain expertise or where human-in-the-loop decision-making is beneficial.

The method can further comprise using the retrained model to assign a construction model, object, structure and/or solution to a sub-collection and/or class, and then using feature data associated with other objects in said sub-collection to improve the level of detail of the assigned model. Doing so results in improved construction model with an increased level of detail. In training the machine learning model used to perform the classifications using the methods presented in the present disclosure, the method is able to more efficiently provide an accurately improved model.

In some embodiments of the presented method, increasing the level of detail of a model assigned to a sub-collection comprises copying feature data associated with one or more other objects in a sub-collection, to the assigned model in order to increase the level of detail of the assigned model by copying to it details the model was not already associated with. By increasing the feature data associated with the model, the level of detail is improved resulting in an objectively improved, more detailed, 3d construction model.

When a user initiates a change to the feature space that stipulates the activation of a feature that has not been included in the feature space already, as a zero valued additional feature or otherwise, the feature is considered unseen and the model performs full retraining. In some embodiments, performing full retraining of the machine learning model can comprise fully retraining the machine learning model without having to re-apply feature selection. By using the optimised chosen feature space previously generated using feature selection, the model can be fully retrained by simply adding the unseen feature to the optimised chosen feature space and then performing retraining using the values from the feature data associate with each feature. In eliminating the need to perform feature selection during full-retraining, the process can be performed faster and more efficiently, requiring less computational resources. As such, regardless of whether the system requires partial retraining using boosting or full retraining, the presented method always benefits from improved speed and efficiency of retraining.

In some embodiments, the partial training boosting rounds are performed using the data points and values from the feature data associated with the newly activated relevant features. These values and data points may be retrieved from a memory cache in which they were stored subsequent to the features being included in the model's structure as additional features with zero set values. In some embodiments, the boosting rounds are further performed based on data points and values from the feature data which re associated with features other than the newly activated relevant features. By adding selective data points during boosting rounds ensures the model learns relevant patterns quickly without destabilizing existing knowledge. Further, including a percentage of other data points not associated with the newly activated relevant features during boosting prevents the model from overfitting to the newly activated features or changes. This step helps improve the overall performance, fairness and accuracy of the machine learning model.

In some embodiments, the feature data can comprise user labels associated with one or more features and/or structures. The user labels can be generated based on historic user changes which affect the feature space, that is to say any changes the user has previously made to a model and/or feature space comprising a feature can be recorded in order to train a model to adapt to user requirements. This improves the adaptability of the system as by recording user changes and using it to train the model, data previously deemed useless can be provided value and used to make more accurate classifications based on the established needs, requirements an behaviour of a user. The user labels can provide an objective inference of the importance of a feature to a user allowing for more accurate and efficient feature selection.

Allowing a user to make changes to models, classification and/or the chosen feature space directly allows for dynamic adaptability based on user requirements. In inferring required changes to a feature space based on user changes the user is able to provide validation of a chosen feature space and/or make adjustments which can be used to train the model using supervised learning techniques. User changes which affect the user space can further comprise generating use labels reflecting the change and associating the use labels to relevant features and/or structures within the feature data. Said labels and/or user changes can subsequently be used to improve the accuracy of feature selection and/or to identify relevant features for activation of/addition to the feature space during retraining.

In some embodiments, a GUI or alternative user input interface is provided to a user to allow them to initiate a user change. Providing the display of a chosen feature space allows the user validate or submit a user change to the feature space improving the machine user interface and allowing the user to dynamically refine an/or adjust the chosen feature space and/or the classification of models between the sub-collections. In providing a display that facilitates these user changes, the method provides an improved human-machine interface to dynamically provide an improved machine learning model based on user input.

Feature data may require pre-processing to be in a format suitable for feature selection. In some embodiments the method includes determining whether pre-processing is required and only performing the pre-processing if the data requires it. In doing so, wasted resources required to perform unnecessary pre-processing are relieved resulting in a more efficient method.

In some embodiments, recursive feature elimination (RFE) is used for feature selection. By incorporating the determination/generation of the model and feature space into the RFE process-rather than merely assigning performance scores to individual features-the method is streamlined, eliminating the need for additional post-RFE steps to construct the model. This integration results in a faster and more efficient process for generating machine learning models with optimized feature spaces.

In embodiments where feature selection is performed using RFE, the process may involve generating and testing multiple machine learning models with varying feature spaces, and selecting a model that satisfies predefined performance criteria and/or thresholds while minimizing the number of features in the feature space. Performance scores can be determined for each model, with model generation ceasing once a model is identified that meets the performance threshold and/or criteria, such that no further features can be removed without causing the performance score to fall below the threshold.

The generated and/or retrained machine learning model can be encoded and saved for later use in classifying a model or a set of model objects. By incorporating an encoding step, feature data can be more flexibly represented as a combination of categorical and numerical data. The encoding ensures that all features fit within the feature space of a single model, regardless of their data type. This enhances the robustness and versatility of the feature data, resulting in a more informed and accurate training process. Consequently, the machine learning model becomes more robust and precise, improving its applicability.

In some embodiments, applying the machine learning model to classify construction model objects, structures, and/or solutions may include adhering to user-defined filtering requirements. Specifically, a user can filter out certain sub-collections of the plurality of sub-collections, preventing one or more model objects from being classified into those sub-collections. The method may involve determining whether a predicted sub-collection has been filtered out and, if so, iteratively checking the next most suitable sub-collection until a non-filtered sub-collection is identified. Once identified, the set of model objects can be assigned to that sub-collection. This approach provides users with enhanced control over the classification process, facilitating an improved human-machine interface and enabling more dynamic and flexible system control through user-initiated inputs.

A second aspect of the present disclosure comprises a computer program comprising instructions which, when the program is run by a computer, cause the computer to carry out the methods of the present disclosure. A third aspect of the present disclosure comprises an apparatus comprising means for carrying out the methods of the present disclosure.

Aspects of the present disclosure will now be described in reference to the drawings.

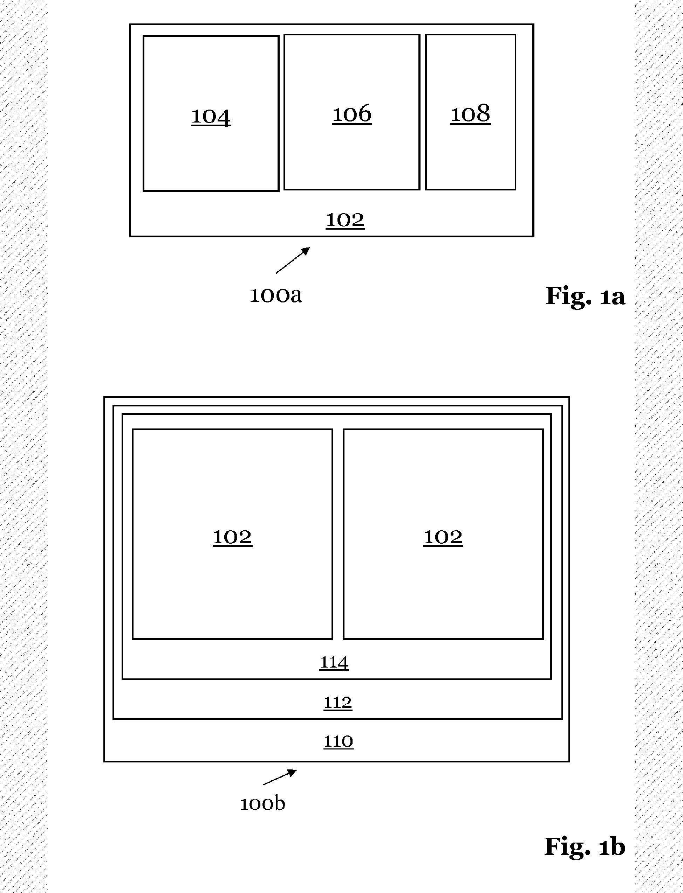

Fig.1a shows feature data 100a wherein the feature data 100a comprises data (also referred to as metadata) for one or more models 102, for one or more construction products (construction projects) and/or for each of a plurality of different sets of model objects. Although Fig.1a diagrammatizes the feature data 100a comprising only one model, it is to be understood that the feature data comprises data associated with a plurality of models and/or sets of model objects. The feature data may contain information in the form of features 104 and values 106 for each of the sets of model objects 102 comprised by the feature data 100a. For example, the feature data 100a can indicate a type and/or geometry of each set of model objects 102, for example a column 102 may have a height feature 104 and a cross section feature 104 with the relevant values 106 associated with both. The feature data 100a may comprise features 104 and associated values 106 which stipulate the profile definitions, material definitions and/or technical document definitions per a model object 102 belonging to the set 102 and, for example different drawings. If the user has previously changes to the content in the feature data, the feature data can further comprise user labels 108 indicative of a user's historic user changes.

The content comprised in the feature data 100 may not be hard-coded content, or created by the modeling application provider, the content may be created by users of the modeling application while they are modeling. The feature data 100 can be a flexible library, a cluster collection, a collection of clusters, a collection of modeled pieces, a digital warehouse of modeled pieces, or simply a digital warehouse, or a user generated collection, or a user generated library, or external library, or additional library, or simply a library. However, herein the mere term "feature data" is used. It should be appreciated that the feature data 100 may be created, maintained, organized and updated separately from modeling, and any known or future ways to create, maintain, organize and update the feature data 100 may be used.

As illustrated by Figure 1b, the feature data 100b can comprise a number of collections 110, said collections can comprise a number of sub-collections 112, and said sub-collections can comprise a number of samples 114. The feature data 100b, as illustrated by feature data 100a, can be in an unclassified format in which the sets of model objects 102 associated with each of the one or more models 102 of the feature data 100 has not be assigned to a collection 110 and/or sub-collection set 112. The feature data 100, as illustrated by feature data 100b, can be in a classified state in which each set of model objects 112 comprised by the feature data 100b is classified to a collection 110, sub-collection 112 and/or sample 114 such that the collection 110 comprises a number of sub-collection 112 and/or sample 114 sets of model objects 102 with corresponding metadata (features 104, associated values 106 and/or user labels 108).

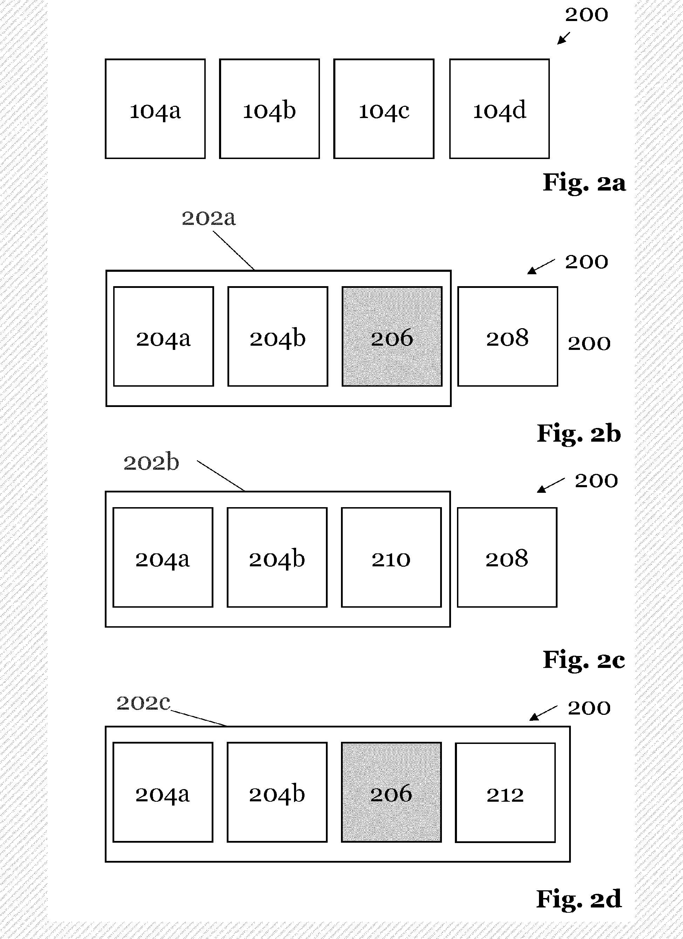

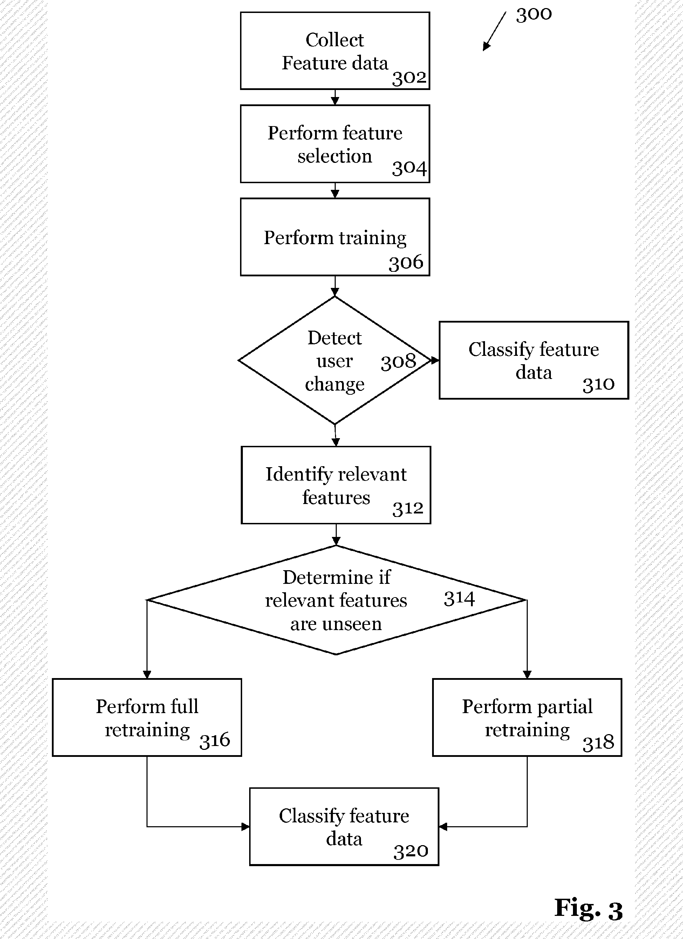

Figures 2a-d illustrate the plurality of features 200 associated with the one or more sets of model objects 102 within the feature data 100 at various steps of the method 300 described in reference to Figure 3.

Each feature 104 within the plurality of features 200 can be associated with one or more values 106 and/or user labels 108. The plurality of features 200 defines the feature space for the feature data 100.

Fig. 2a illustrates the plurality of features 200a is in a pre-selection state, where the dimensionality of the feature space has not been reduced using feature selection. In this state, the feature space includes all the features 102 and values 106 comprised in the feature data 100. The plurality of features 200 are in the pre-selection state before step 304 of the method 300 described below with reference to Figure 3.

As described with reference to step 304 of Fig. 3, feature selection can be performed on the plurality of features 200 in order to determine a chosen feature space 202a with a reduced dimensionality in comparison to the pre-selections state plurality of features 200. Figure 2B illustrates the plurality of features 200b in a provisional selection state subsequent to completing feature selection. The plurality of features 200 can be in the provisional selection state as a result of the feature selection performed at step 304 and stay in the provisional selection state at method steps 306-314 of the method 300 described below with reference to Figure 3. A chosen feature space 202a can be determined using feature selection such that the chosen feature space 202a comprises a subset of the plurality of features 200 and has a reduced dimensionality in comparison to the pre-selection state plurality of features 200. Each of the features 104 of the plurality of features 200 selected for inclusion in the chosen model space 202 can be associated with a model value (also referred to as a model parameter and/or model weight), wherein each model value is calculated based on the values 106 associated with the respective feature 104. The chosen feature space 202 can comprise one or more of the plurality of features 200 as important features 204a-b. Important features 204a-b are features 104 determined by the feature selection process to be important to the classification of the feature data 100. Important features 204 are included in the chosen feature space 202 of a machine learning model and form part of the machine learning model's structure. Important features 204 are activated within the chosen feature space 202, wherein being activated refers to the feature 104 being assigned a non-zero model value such that it can be trained based on the respective values 106 the feature 104 is associated with.

One or more features 104 of the plurality of features 200 can be included in the chosen feature space as additional features 206. Additional features 206 can be included in the chosen feature space 202 of a machine learning model and form part of the machine learning model's structure, but are assigned a zero model value. As such, the additional features 206 remain part of the model's structure but are not activated during training, ensuring that no computational resources are expended on the additional features 206. Consequently, training is based solely on the values 106 associated with the important features 204 as to train the model to optimise the model values associated with each of the important features 204. This excludes the additional features 206 from training as there model value is fixed to zero so no training based on the values 106 associated with the additional features 206 is required in order to determine the associated model values. Although excluded from training, the inclusion of the additional features 206 in the model ensures they are part of the model should they require activating in subsequent retraining. Although the example of Fig.2b shows only two features 104 of the plurality of features 200 being included in the chosen feature space 202a as important features 204a-b, the chosen feature space 202a can comprise any number of features 104 of the plurality of features 200 as important features 204. The same applies to the additional features 206 in that the chosen feature space 202 can comprise any number of features 104 of the plurality of features 200 as additional features 206. As shown by Figure 2b, the provisional selection state plurality of features 200 can further comprise one or more features 104 of the plurality of features 200 as discarded features 208 208. Discarded features 208208 may be features 104 present in the feature data 100 but not selected for inclusion in the chosen feature space 202a of the machine learning model. These features 104 are neither important features 204 nor additional features 206 and are entirely excluded from both the chosen feature space 202 and the structure of the machine learning model. A feature 104 from the plurality of features 200 may be classified as a discarded feature 208 based on feature selection, which determines that the feature 104 has negligible importance to the classification problem at hand.

Subsequent to feature selection, a retraining process may be performed on the machine learning model in order to generate the plurality of features 200c,d in a retrained state. Figure 2d illustrates the plurality of feature 200 in a partially retrained state, wherein the process of partial retraining is described later with reference to step 318 of Fig. 3. In the partially retrained state, one or more additional features 206 present in the chosen feature space 202a in the preliminary selection state 200b may be activated. That is to say, one or more relevant features may be identified based on a user-initiated change affecting the feature space and in turn the identified relevant features maybe determined to correspond to one or more additional features in the chosen feature space. Following partial retraining, the activated additional features 210 are incorporated into the chosen feature space 202b as relevant features 210 and each are assigned a new non-zero value based on the values 106 in the feature data 100 associated with the activated additional features (relevant features) 210. In other words, activating an additional feature 206 into a relevant feature 210 during partial retraining involves retraining the model using at least the values 106 in the feature data 100 associated with the activated additional features 210 to provide a non-zero model value (also referred to as a value, model weight and/or weight) associated with each additional feature 206 activated into relevant features 210. It can be said that a relevant feature 210 and an important feature 204 are functionally equivalent such that when referring to activating an additional feature 206 into a relevant feature 210, it could alternatively be phrased as activating an additional feature 206 into an important feature 204. During partial training, additional features 206 may be activated but discarded features 208 208 cannot as they are not part of the model's structure and therefore cannot be trained using partial training or model boosting. Although Fig. 2 demonstrates the activation of an additional feature 206 into a relevant feature 210 as part of partial training, partial training may also comprise setting the model value associated with an important feature 204 within the chosen feature space to zero thereby transitioning the important feature 204 into an additional feature 206. That is to say, as part of partial training an important feature 204 can be deactivated from the chosen feature space 202b.

Figure 2d illustrates the plurality of features 200 in a fully retrained state, wherein the process of fully retraining is described later with reference to step 316 of Fig. 3. In the fully retrained state, a discarded feature 208 may be added to the chosen feature space 202c as an unseen feature 212, before the model is fully retrained based on the values 106 comprised in the feature data 100 and associated with the one or more features 104 in the chosen feature space 202d in order to determine new model values associated with the features 104 of the chosen feature space 202d, inclusive of the one or more unseen features 212. That is to say that the unseen feature 212 is treated as an important feature 104 and as such the process of fully retraining may comprise adding a discarded feature 208 to the chosen feature space as an important feature 104. As in partial retraining, fully retraining can additionally comprise activating an additional feature 206 or deactivating an important feature 104. In other words, one or more relevant features may be identified based on a user-initiated change affecting the chosen feature space and in turn the identified relevant features may be determined to correspond to one or more discarded features 208 and/or one or more new features not previously comprised in the feature data 100 and in response the determined one or more discarded features 208 or new features can be added to the chosen feature space 202d as unseen features 212. Fully retraining and partial retraining can be seen as alternatives to each other, but the present disclosure encompasses iterative versions of the method, where a plurality of features in a partially or fully retrained selection state may subsequently be retrained again, either fully or partially.

Fig. 3 presents a method for training and retraining a machine learning model in order to classify the feature data 100 of Fig. 1 using the features of Fig. 2. Step 302 of the method 300 can comprise collecting the feature data 100. That is to say, step 302 of method 300 can comprise collecting feature data comprising a plurality of features, each feature associated with a model of one or more models and a value. This step can comprise compiling metadata, features 104 and/or values 106 and/or user labels 108 from one or more construction products 102, models, sets of model objects 102, collections 110 and/or model objects 102. Within the feature data 100 can be comprised one or more models 102, each comprising one or more sets of model objects 102. The data structure and/or feature data 100 associated with each model 102 or set of model objects 102 can vary, reflecting the complexity and specific requirements of different model objects. For example, the feature data 100 for a set of model objects 102 can comprise selected key-value pairs 104, 106 shown of categorical and/or numerical features 104 which can be used to describe and/or define the set of model objects 102. The feature data 100 can be collected from memory, via a cloud service and or via any appropriate means. The feature data 100 can be generated based on user generated models 102 and/or model objects 102. Feature data 100 can comprise labels 108 indicating a previous user change to a set of model objects 102, a classification of a set of model objects 102, or to a feature 104 of the one or more features 200. The user labels 108 can infer a user importance for each feature 104 and can be used to determine the important features 104 during feature selection, discussed with regard to step 304 of method 300.

Step 302 of method 300 can further comprise detecting that the feature data 100 requires preprocessing and subsequent to the determination performing pre-processing operations such that the feature data 100 can be used to generate a feature space for a machine learning model. In other words, step 302 can comprise determining the feature data requires pre-processing and in response preprocessing the feature data prior to training the one or more machine learning models. Preprocessing can comprise one or more of performing a multicollinearity check to mitigate multiple similar feature key pair values, reducing noise in the data, performing numerical value binning, performing categorical value encoding, performing separation based on content type determined by the user. At Step 302 a determination that preprocessing is not required may also be made and in such situations, the method can continue without performing any preprocessing.

At step 304 of method 300, the method can comprise performing feature selection. Step 304 of method 300 can comprise generating a machine learning model by performing feature selection on the feature data to select a chosen feature space comprising a subset of the plurality of features, wherein the subset of the plurality of features comprises one or more additional feature, wherein the value associated with each of the one or more additional feature in the chosen feature space is set to zero. Although feature selection is discussed in detail with reference to using recursive feature elimination (RFE), the present disclosure covers the use of any other appropriate feature reducing process that finds the minimum number of features while maximizing performance, such as, but not limited to, Principal Component Analysis (PCA), Sequential Feature Selection, Inverse Sequential Feature Selection or LASSO regression (L1 regularization). Feature elimination may be based on feature importance scores generated by a tree-based model, for example an XGBoost model. Performing RFE can comprise using F1 scores and or thresholds, wherein the thresholds can be determined by a user or pre-determined. Alternatively, feature selection may replace the utilisation of F1 scores with any appropriate loss and/or performance metric and/or score. Recursive Feature Elimination (RFE) can be used on the feature data 100 to reduce feature dimensionality and create a smaller, more focused chosen feature space 202 comprising only a subset of the plurality of features 202 comprised by the feature data 100. RFE can generate and/or identify a machine learning model with a minimal chosen feature space 202 such that the chosen feature space 202 comprises the minimum number of features 104 required to meet a performance threshold. In doing so, RFE can be used to process the plurality of features 200 of the feature data 100 when in a first pre-selection state, as in Figure 2a, in order to generate a provisionally selected chosen feature space 202a. RFE generates the chosen feature space 202a by scoring and/or ranking the importance of each feature 104 of the plurality of features 200 and testing models comprising varying combinations of the most important features 204. Here, the higher the score of the feature 104 the more likely it is to be included in the chosen feature space 202 as an activated important feature 204. The lower the score associated with a feature 104 the higher chance the feature 104 has of being discarded from the feature space as a discarded feature 208. Those scores above a minimum threshold, but not selected to be activate important features 204, may be included in the chosen feature space 202 as additional features 206. As described with reference to Figure 2, additional features 206 are set a zero model value within the chosen feature space 202. The output of step 304 is a machine learning model with the chosen feature space 202 determined using RFE.

RFE can determine the chosen feature space 202 and generate the machine learning model by sequentially creating a plurality of intermediate machine learning models, each comprising a different subset of the plurality of features 200. These intermediate models are evaluated using a loss function to generate a performance score. If an intermediate machine learning model is determined to meet the performance threshold and it is further determined that no activated important features 204 can be removed without causing the performance to fall below the threshold, that intermediate model is selected, and the RFE process terminates without generating further permutations of intermediate models. That is to say, the intermediate machine learning model is selected such that it minimises the number of important features 204 in the chosen feature space 202 whilst meeting a performance threshold. The machine learning model generated by RFE may be an XGBoost model, a light gradient boosting machine (LightGBM) model, a Categorical boosting (CatBoost) model or a machine model with a Gradient Boosted Decision Trees (GBDT) framework.

Performing RFE can comprise first generating a baseline model with a feature space comprising each feature 104 of the plurality of features 200 comprised by the feature data 100. The baseline model can be used to establish a baseline performance score, wherein using the model to establish a baseline performance score can comprise training the machine learning model based on the values 106 comprised by the feature data 100 and applying the model. Performing RFE can further comprise performing a single pass of feature elimination to remove one or more features from the feature space 202 of the baseline model prior to using the baseline model to establish a baseline performance score.

RFE can be iteratively performed on the baseline model to generate one or more further intermediate machine learning models. Each pass of RFE can have a pre-determined step size parameter which controls the number of features 104 discarded from the feature space 202 of the current intermediate machine learning model with each pass. At each pass of RFE, the features 104 in the feature space 202 of the current intermediate machine learning model can be ranked based on a performance metric and/or feature importance score associated with each of the features 104. The feature importance score associated with each of the features 104 in the feature space can be updated at each pass of RFE. At each pass of RFE, the lowest ranking features can be discarded, wherein the number of discarded features 208 is set by the step-size.

When the number of features 104 in the feature space 202 of the current intermediate machine learning model meets or surpasses each checkpoint value of a plurality of checkpoint values defined by a division factor, one or more of the highest ranking features 104 in the feature space 202 of the current intermediate machine learning model can be selected as important features 204. The remaining features in the feature space 202 of the respective intermediate machine learning model remain in the feature space 202 as deactivated additional features 206 with their model values set to zero. The one or more highest ranking features 204 selected at each pass of RFE can be determined by selecting each feature 104 in the feature space 202 of the current intermediate machine learning model associated with a feature importance score/metric which meets a pre-defined threshold. When the number of features in the feature space 202 of the current intermediate machine learning model meets or surpasses each checkpoint value of a plurality of checkpoint values defined by a division factor, RFE can further comprise training the intermediate machine model based on the values 106 in the feature data 100 associated with the important features 204 in the feature space 202 of the respective intermediate machine learning model at the current pass of RFE, and applying the model to establish a performance score. If the established performance score exceeds a threshold, the process of RFE can terminate early, wherein the threshold can be based on a pre-defined tolerance of the baseline performance metric. Else, the process can continue until each of the plurality of checkpoint values has been surpassed by the number of features in the feature space of the intermediate machine learning model at the current pass of RFE.

When a sufficient number of RFE rounds have been completed in order to reduce the number of features in the feature space 202 of the current intermediate machine learning model below each of the checkpoint values in the plurality of checkpoint values, RFE can comprise identifying the highest performance score from the plurality of performance scores generated at the corresponding plurality of checkpoint values. The performance threshold can be determined based on the highest performance score such that the performance threshold defines an acceptable performance tolerance of the highest performance score. RFE can further comprise identifying one or more intermediate machine learning models associated with respective performance scores that meet the performance threshold and selecting from them those one or more intermediate machine learning model the intermediate machine learning model with the lowest number of activated important features 204. If one or more intermediate machine learning models associated with performance scores that meet the performance threshold have the same number of important features 204, the intermediate machine learning model with the largest number of features 104 in their feature space 202 is selected. That is to say, If one or more intermediate machine learning models associated with respective performance scores that meet the performance threshold have the same number of important features 204, the intermediate machine learning model associated with the largest milestone value is selected. The selected intermediate machine learning model can then be output from the RFE process wherein the feature space of the selected intermediate machine learning model is used as the chosen feature space 200a.

If each performance metrics of the plurality of performance metrics generated at the corresponding plurality of checkpoint values fails to meet the performance threshold, the step size can be reduced and the process of RFE can be rerun such that the feature space is restored to the full plurality of features in the feature data and processed using RFE with the smaller step size. This process can iterate until an intermediate machine learning model is used to generate a performance metric that satisfies the threshold.

Step 306 can comprise encoding, transforming, storing and/or otherwise saving the machine learning model or solution data defining the machine learning model to memory. Step 306 can comprise training the machine learning model using the one or more values associated with the one or more features of the subset of the plurality of features. The encoding can comprise providing both numerical and categorical features 104 in a standardized format such that they can be contained by a single model. Step 306 can further comprise training the machine learning model using the chosen feature space 202 and the values 106 associated with the features 104 of the chosen feature space 202. The training may be performed using any known machine learning training process.

At step 308, it is determined whether user input indicating a user change which affects the chosen feature space 202 is determined. That is to say, step 308 can comprise detecting a user initiated change affecting the chosen feature space. The user change may be received via a display and/or user input interface. The display may provide an indication to a chosen feature space 202, sub-collection 112, collection 110, set of model object 112 and/or a model 112 and allow a user to provide an input indicating a change to the chosen feature space 202 either directly or via a change to a classification performed by the machine learning model. In other words, step 308 can comprise displaying, to a user, the chosen feature space and/or at least one of the plurality of sub-collections; wherein the detected user change affecting the feature space comprises: in response to displaying the chosen feature space and/or at least one of the plurality of sub-collections: receiving a user input instructing the user change. For example, the user change may comprise moving, adding or deleting a set of model objects form a sub-collection 112, collection 110 and/or sample. The user change may further comprise and indication that a feature 104 should be removed and/or added from/to the chosen feature space 202. The user input may further indicate a request to merge, delete and/or create sub-collections 112, collections 110 and/or samples 114. A user change may further comprise a request to filter out one or more sub-collections 112 when classifying a set of model objects 102 using the machine learning model. User labels 108 indicative of a user change may be applied to features 104, models 102, sets of model objects 102, sub-collections 112 and or any further components of the feature data 100. The user labels 108 may be stored as part of the feature data 100, optionally within metadata. If user change is not detected, the method 300 proceeds to step 310. If a user change is detected the method proceeds to step 312.

At step 310, the machine learning model generated at step 302 is used to classify the one or more sets of model objects comprised by the feature data 100 into one or more collections 110, sub-collections 112 and/or samples 114. That is to say, at step 310 the method can comprise classifying, using the machine learning model, the feature data in to a plurality of sub-collections. For each set of model objects 102, the machine learning model, which may be an XGBoost model, can obtain predicted probabilities for one or more sub-collections 112. The XGBoost can use a soft probability (SoftProb) function/process to provide each set of model objects 102 with predicted classification probabilities for each sub-collection 112. For each set of model objects 102, the sub-collection 112 (also referred to as class) with the highest probability becomes the predicted sub-collection 112 for the respective set of model objects 102. Once assigned to a sub-collection 112, each of the newly assigned sets of model objects 102 can be further processed based on the feature data 100 associated with the one or more sets of model objects 102 comprised by the sub-collection 112. For example, the newly assigned sets of model objects 102 can have their level of detail increased by copying feature data 100 from the sets of model objects 102 comprised by the sub-collection 112, to the newly assigned set of model objects 102 wherein the copied feature data 100 was not previously associated with the newly assigned set of model objects 102. Further, step 310 can comprise receiving a user input indicating a target set of model objects and requesting to increase their level of detail. The machine learning model can then classify the target set of model objects as described above in reference to the sets of model objects 102 comprised in the feature data 100. The target set of model objects may be comprised in the feature data 100 or be independent of the sets of model objects 102 comprised in the feature data 100. Step 310 can comprise determining if the predicted sub-collection 112 has been filtered out by a user, this can be in response to receiving a request from a user to disable and/or filter out a sub-collection 112. If the predicted class has not been filtered or disabled the respective set of model objects is simply assigned to the sub-collection 112 as previously described. If the predicted class has been filtered out, the machine learning model can use the generated probabilities to determine the next most probable sub-collection 112 for the set of model objects 102. The system can iterate this selection process until a sub-collection 112 is predicted which has not been filtered out or disabled, said sub-collection 112 is then provided as the predicted class 112 and the set of model objects 102 is assigned.

At step 312, one or more features 104 of the plurality of features 200 comprised in the feature data 100 are identified as relevant features 210 based on the detected user initiated change. That is to say, step 312 can comprise identifying one or more relevant features of the plurality of features. For example, if a user activates an additional feature 206 in the chosen feature space 202b via their user change detected at 308, said additional feature 206 may be identified as a relevant feature 210. Depending on the type of relevant feature, a type determination being made at step 314, the relevant feature 210 can subsequently be evaluated using either the retraining process described below with reference to steps 316 or the retraining process described below with reference step 318.

At step 314, it is determined whether each of the identified relevant features 210 of step 312 is an unseen feature, wherein an unseen feature is a feature is not currently part of the chosen feature space 202, for example the discarded features 208 discussed with reference to Figure 2. That is to say, at step 314 the method can comprise determining if at least one of the one or more relevant features is an unseen feature, wherein an unseen feature is a feature not comprised by the chosen feature space. If at least one feature 104 of the one or more relevant features 210 identified at step 314 is an unseen feature, the method proceeds to step 316. If each of the one or more relevant features 210 identified at step 316 is already part of the chosen feature space 202 as an important feature 204 or an additional feature 206, the method proceeds to step 318.

At step 316, full retraining is performed on the machine learning model. Fully retraining the model can be based on the one or more relevant features 210 identified in step 312. That is to say, the chosen feature space 202 can be updated to comprise the one or more relevant features 210 and the updated chosen feature space 202 can be retrained using the feature data 100 values associated with the one or more features 104 comprised in the chosen feature space 202. In other words, step 316 can comprise performing a full retraining of the machine learning model based on the one or more relevant features. Updating the chosen feature space 202 to comprise the one or more relevant features 210 identified as unseen features 212 can comprise reperforming RFE. Alternatively, the one or more unseen features 212 can simply be added to the chosen feature space 202 generated at step 304. For example, as discussed with reference to Figure 2, the chosen feature space 202 generated at step 302 can be seen equivalent to the chosen feature space 202a of Fig. 2a. Upon performing full retraining, the one or more relevant features 210, identified as unseen features 212 at step 314, can be added to the chosen feature space 202 as shown by Figure 2d. In other words, a feature previously discarded 208 at step 304 can be reintroduced to the chosen feature space 202 at step 316 before performing full retraining of the model using the values 104 comprise by the feature data 100. Additionally, any of the one or more relevant features 210 which are part of the chosen feature space 202 as additional features 206 may be activated prior to fully retraining to provide model values. Similarly, one or more important features 204 identified as relevant features 210 may be deactivated prior to fully retraining to provide model values.

In step 318, the machine learning model can be partially retrained by performing model boosting. In other words, step 318 can comprise performing a partial retraining of the machine learning model by performing model boosting to assign the relevant features a non-zero weight in the chosen feature space using the one or more values associated with the one or more relevant features. In model boosting, the additional features 206 with zero set model values in the chosen feature space 202 can be exposed to their unused associated values 106 in the feature data 100 in order to provide them with a non-zero model value in the chosen feature space 202. In other words, the previously hidden data points 106 are reintroduced into the model during partial training. The data points 106 may be introduced from the cache memory which improves the speed and computational efficiency of the process. Step 318 can further comprise calculating performance metrics associated with one or more of the features 104 comprised in the chosen feature space 202 and boosting based on the performance metrics. That is to say that the one or more additional feature 206 associated with the highest performance metrics may be boosted, wherein the performance metrics may be biased by the identification of the one or more relevant features 210. That is to say that the performance metric associated with the one or more relevant features 210 may be positively biased and/or weighted. Boosting can comprise specifying a portion of the feature data 100 already used to train the model in step 306 and using the specified portion in the boosting rounds. That is to say, the boosting rounds can comprise training the machine learning model based on values 106 or data points 106 associated with the relevant features identified at step 312 and/or values 106 associated with the one or features 104 originally in the chosen feature space 202 when it was generated at step 304. Including a combination of values/datapoints 106 as described prevents the model from overfitting to the newly activated features 210. Adding selective data points 106 associated with the original one or more features 104 in the chosen feature space 202 during ensures the model learns relevant patterns quickly without destabilizing existing knowledge. As understood, model boosting involves adding new trees based on the specified values 106 and/or datapoints 106 from the feature data 100 and considering merged/split class proportions. Model boosting can comprise sequentially/iteratively building models, wherein each new model, or intermediate machine learning model, correct errors made by the previous ones, such as by improving a performance metric. Model boosting can comprise adding trees to the model sequentially, where each tree is trained to minimize the residual errors of the intermediate machine learning model constructed up to that point and/or trained to maximize the performance metric of the intermediate machine learning model constructed up to that point. Each added tree may associated with a feature 104 in the chosen feature space 202 and can define how the feature space is divided into the sub-collections 112. For example, an added tree may be associated with a numerical feature 104 x such and define a split like x > 100 wherein the plurality of sets of model objects 102 in the feature data 100 are divided into separate sub-collections 112 depending on whether their x value meets the defined threshold of 100. The added tree may similarly be associated with a categorical feature 104. Each added tree may be selected based on the gradient of a loss function with respect to model predictions. That is to say, at each node, the algorithm selects the feature 104 and threshold that most effectively separates the feature data 100, optionally using criteria like Gini impurity, information gain, and/or variance reduction. Subsequent to boosting, a performance metric may be calculated for the boosted model and the performance metric. The performance metric may be calculated by comparing predicted classifications of the model against user initiated changes and/or classifications.

The model boosting of step 318 can comprise adding new trees to correct the residual errors and/or maximize a performance metric of the existing model. The introduction of non-zero values for the additional features 206 allows the new trees to leverage the values associated with the additional features 206 from the feature data 100 to reduce residuals more effectively. The process can be explained in detail as follows:

Determine an initial prediction with the target additional feature 206 model value set to zero:

$$\hat{y}_i^{(0)} = \text{Initial Prediction}$$

Calculate the residual:

$$r_i^{(0)} = y_i - \hat{y}_i^{(0)}$$

Update the initial predictions with the target additional feature 206 activated to a Non-Zero model value:

$$\hat{y}_i^{(m)} = \hat{y}_i^{(m-1)} + \eta f_m(x_i, x_{\text{newFeature}})$$

Update the model values to minimize loss:

$$\text{Loss} = \sum_i \ell\left(y_i, \hat{y}_i^{(m)}\right)$$

Use the residuals to approximate the gradient of the loss function with respect to the model's predictions:

$$r_i^{(m)} = -\frac{\partial \ell\left(y_i, \hat{y}_i^{(m-1)}\right)}{\partial \hat{y}_i^{(m-1)}}$$

The boosting data is then created by combining new data points 106 that have a non-zero value for the target additional feature 206 with a subset of the existing data points 106 associated with one of the one or more features 104 comprised by the chosen feature space 202. This ensures that the model benefits from the new information provided by the target additional feature 206 while still incorporating relevant existing data.

In each boosting iteration, a new tree is created to fit the residuals:

$$r_i^{(m)} = y_i - \hat{y}_i^{(m-1)}$$

The model is then updated by adding the contribution of the new tree:

$$\hat{y}_i^{(m)} = \hat{y}_i^{(m-1)} + \eta f_m(x_i, x_{\text{newFeature}})$$

The final prediction is obtained after all boosting iterations:

$$\hat{y}_i = \hat{y}_i^{(M)}$$

In step 320, following the retraining performed in step 316 or 318, the retrained machine learning model can be used to classify the feature data 100, consistent with the description provided in step 310 of method 300. The only difference between the classification of steps 320 and 310 is that the machine learning model performing the classification has been retrained as part of step 320. In other words, step 320 can comprise classifying, using the retrained machine learning model, the feature data in to a plurality of sub-collections.

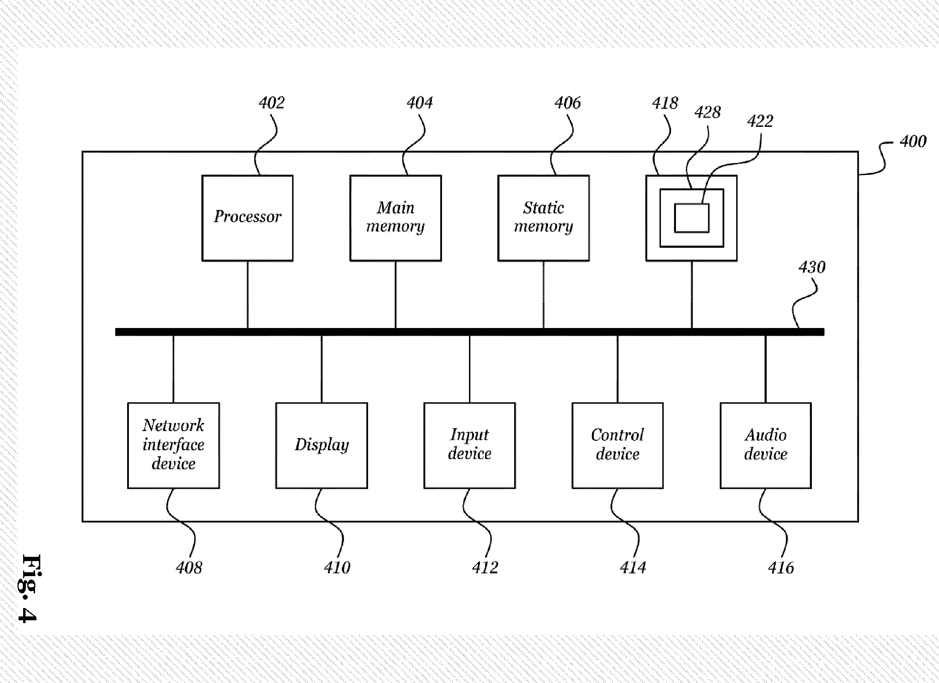

Some or all of the disclosed methods maybe implemented using a computer apparatus or computing device. Accordingly, the methods described herein may form all or part of a computer-implemented method. An example computing device is shown in Fig. 4.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

The present disclosure further includes, but is not limited to, the following numbered clauses:

Clause 1. A computer implemented method comprising:

collecting feature data (100) comprising a plurality of features (200), each feature (104) associated with one or more values (106);
performing feature selection on the feature data (100) to select a machine learning model with a chosen feature space (202a) comprising a subset of the plurality of features (200), wherein the subset of the plurality of features (200) comprises one or more additional features (206), wherein each of the one or more additional features in the chosen feature space (202) is associated with a model value set to zero;
training the machine learning model using the one or more values associated with the one or more features of the subset of the plurality of features;
in response to detecting a user initiated change affecting one or more additional features (206) in the chosen feature space:

performing a partial retraining of the machine learning model by performing model boosting to assign the one or more of the additional features (206) affected by the user-initiated change in the chosen feature space a non-zero model value.

Clause 2. A computer implemented method comprising:

collecting feature data (100) comprising a plurality of features (200), each feature (104) associated with one or more values (106);
performing feature selection on the feature data (100) to select a machine learning model with a chosen feature space (202a) comprising a subset of the plurality of features (200);
training the machine learning model using the one or more values associated with the one or more features of the subset of the plurality of features;
in response to detecting a user initiated change affecting one or more unseen features, wherein an unseen feature is a feature not comprised by the chosen feature space (202):

updating the chosen feature space to additionally comprise the one or more unseen features;
retraining the machine learning model using the updated chosen feature space.

Clause 3. A computer implemented method comprising:

collecting feature data (100) comprising a plurality of features (200), each feature (104) associated with one or more values (106);
performing feature selection on the feature data (100) to select a machine learning model with a chosen feature space (202a) comprising a subset of the plurality of features (200);
training the machine learning model using the one or more values associated with the one or more features of the subset of the plurality of features;
detecting a user initiated change affecting at least one of the plurality of features comprised by the feature data;
in response to detecting the one or more features affected by the user initiated change corresponds to one or more additional features in the chosen feature space:
performing a partial retraining of the machine learning model by performing model boosting to assign the one or more corresponding additional features (210) in the chosen feature space a non-zero model value;
in response to detecting the one or more features affected by the user initiated change corresponds to one or more unseen features (212, 208), wherein an unseen feature is a feature not comprised by the chosen feature space (202):
performing a full retraining of the machine learning model.

**Claims**

1. A computer implemented method comprising:

collecting feature data (100) comprising a plurality of features (200), each feature (104) associated with a model (102) of one or more models and one or more values (106);
generating a machine learning model by performing feature selection on the feature data (100) to select a chosen feature space (202a) comprising a subset of the plurality of features (200), wherein the subset of the plurality of features (200) comprises one or more additional features (206), wherein each of the one or more additional features in the chosen feature space (202) is associated with a model value set to zero;

training the machine learning model using the one or more values associated with the one or more features of the subset of the plurality of features;
detecting a user initiated change affecting the chosen feature space;

in response to detecting the user initiated change affecting the chosen feature space:
identifying one or more relevant features of the plurality of features;
determining if at least one of the one or more relevant features is an unseen feature (212, 208), wherein an unseen feature is a feature not comprised by the chosen feature space (202);

in response to determining that at least one of the one or more relevant features is an unseen feature (212, 208):
performing a full retraining of the machine learning model based on the one or more relevant features;
in response to determining that none of the one or more relevant features is an unseen feature (212, 208):
performing a partial retraining of the machine learning model by performing model boosting to assign the relevant features (210) in the chosen feature space a non-zero model value in the chosen feature space using the one or more values (106) associated with the one or more relevant features (210);
classifying, using the retrained machine learning model, the feature data (100) in to a plurality of sub-collections (112).

2. The method of claim 1 further comprising:

detecting a user input requesting to increase level of detail relating to a target set of model objects of a model for a construction project;
classifying, using the retrained machine learning model, the target set of model objects to a first sub-collection of the plurality of sub-collections;
increasing the level of detail of the target set of model objects to a level of detail defined by the first sub-collection.

3. The method of claim 2 wherein increasing the level of detail of the target set of model objects to the level of detail defined by the first sub-collection comprises:
adding copied feature data to the target set of model objects, wherein the copied feature data comprises copies of details comprised in feature data associated with one or more sets of model objects in the first sub-collection, that were not comprised in feature data associated with the target set of model objects.

**4.** The method of any preceding claim wherein performing the full retraining of the machine learning model comprises:

updating the chosen feature space to additionally comprise the one or more unseen features;
retraining the machine learning model using the updated chosen feature space and the one or more values associated with the one or more features comprised by the chosen feature space.

**5.** The method of any preceding claim wherein performing a partial retraining of the machine learning model by performing model boosting to assign the relevant features a non-zero weight in the chosen feature space comprises using one or more values associated with one or more existing features in the chosen feature space, wherein the one or more existing features do not comprise any of the one or more relevant features.

**6.** The method of any preceding claim wherein the feature data further comprises data indicative of one or more historic user initiated changes associated with at least one of the one or more models.

**7.** The method of any preceding claim wherein the user initiated change or the one or more historic user initiated changes can comprise:

a user selection of the one or more relevant features of the plurality of features;
adding a new set of model objects to a sub-collection of the plurality of sub-collections;
deleting a set of model objects from a sub-collection of the plurality of sub-collections;
moving a set of model objects to or from a sub-collection of the plurality of sub-collections;
adjusting feature selection decision making criteria associated with the feature space.

**8.** The method of any preceding claim comprising displaying, to a user, the chosen feature space and/or at least one of the plurality of sub-collections; and, wherein the detected user change affecting the feature space comprises:
in response to displaying the chosen feature space and/or at least one of the plurality of sub-collections:
receiving a user input instructing the user change.

**9.** The method of any preceding claim further comprising:
determining the feature data requires pre-processing and in response preprocessing the feature data prior to training the one or more machine learning models.

**10.** The method of any preceding claim wherein generating the machine learning model by performing feature selection on the feature data to select the chosen feature space comprising a subset of the plurality of features comprises:

performing recursive feature elimination (RFE) to determine one or more most important features of the plurality of features;
generating the machine learning model using the chosen feature space, wherein the chosen feature space comprises the one or more most important features.

**11.** The method of claim 7 wherein generating the machine learning model by performing feature selection on the feature data to select the chosen feature space comprising a subset of the plurality of features comprises:

sequentially generating a plurality of intermediate machine learning models, each intermediate machine learning model comprising a different subset of the plurality of features; and,
evaluating each intermediate machine learning model of the plurality using a loss function to generate a performance score;
determining a performance score of the plurality of performance scores meets a performance threshold;
selecting the intermediate machine learning model associated with the performance scores that meets a performance threshold and/or criteria as the machine learning model; wherein the selected intermediate machine learning model minimises the number of important features in the chosen feature space.

**12.** The method of any preceding claims further comprising encoding and/or saving the chosen feature space and trained machine learning model.

**13.** The method of any preceding claims wherein classifying, using the machine
learning model, the feature data in to a plurality of sub-collections comprises:

generating for each sub-collection of the plurality of sub-collections, a predicted probability for each set of model objects of a plurality of sets of model objects associated with the one or more models comprised in the feature data;
selecting, for each set of model objects comprised in the feature data, a first predicted sub-collection based on the respective predicted probabilities for the set of model objects;
determining if a user has filtered out the first predicted sub-collection;
in response to determining that the user has filtered out the first predicted class:

> selecting based on the respective predicted probabilities for the set of model objects, a second predicted class, wherein the second predicted class has not be filtered out;
> assigning the set of model objects to the second predicted class; in response to determining that the user has not filtered out the first predicted class:
> assigning the set of model objects to the first predicted class.

14. A computer program comprising instructions which, when the program is run by a computer, cause the computer to carry out at least the method of any of claims 1 to 10.

15. An apparatus comprising means for carrying out at least the method of any of claims 1 to 10.

**Fig. 1a**

**Fig. 1b**

200

104a 104b 104c 104d

**Fig. 2a**

202a

200

204a 204b 206 208

200

**Fig. 2b**

202b

200

204a 204b 210 208

**Fig. 2c**

202c

200

204a 204b 206 212

**Fig. 2d**

Fig. 3

Fig. 4

## EUROPEAN SEARCH REPORT

**Application Number**

EP 25 15 3206

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/229821 A1 (PITKÄNEN HENRI [FI] ET AL) 20 July 2023 (2023-07-20) * paragraphs [0058] - [0070]; figures 11, 12 * ----- | 1-15 | INV. G06N20/20 G06F30/13 G06F30/27 G06Q50/08 |

**TECHNICAL FIELDS SEARCHED    (IPC)**

G06F
G06N
G06Q

The present search report has been drawn up for all claims

| Place of search | Date of completion of the search | Examiner |
|---|---|---|
| The Hague | 25 June 2025 | Keane, Shane |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 15 3206

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2025

| Patent document cited in search report | Publication date | Patent family member(s) | | Publication date |
|---|---|---|---|---|
| US 2023229821 A1 | 20-07-2023 | EP | 4213056 A1 | 19-07-2023 |
| | | EP | 4524802 A2 | 19-03-2025 |
| | | US | 2023229821 A1 | 20-07-2023 |

For more details about this annex : see Official Journal of the European Patent Office, No. 12/82